# EUROPÄISCHE PATENTSCHRIFT

(11) **EP 1 921 032 B1**
(45) Veröffentlichungstag und Bekanntmachung des Hinweises auf die Patenterteilung: **28.10.2009**
(21) Anmeldenummer: 06123643.6
(22) Anmeldetag: 07.11.2006
(51) Int. Cl.: B65G 53/12, B65G 53/28

(54) **Vorrichtung für den Transport von Schüttgut**
Device for conveying bulk material
Dispositif pour transporter des matériaux en vrac

(43) Veröffentlichungstag der Anmeldung: 14.05.2008
(73) Patentinhaber: Mortec-System GmbH, 39042 Brixen (IT)
(72) Erfinder: Stofner, Rudolf, 39040, Feldthurns (IT); Nitz, Rüdiger, 39040, Feldthurns (IT)
(74) Vertreter: Schneider, Günther Martin

(56) Entgegenhaltungen:
- EP-A1- 0 867 389
- DE-A1- 2 912 794
- DE-A1- 19 935 727
- US-A- 5 033 914

## Beschreibung

Die Erfindung betrifft eine Vorrichtung für den Transport von Schüttgut aus einem Drucksilo, gemäß dem Oberbegriff des Anspruchs 1.

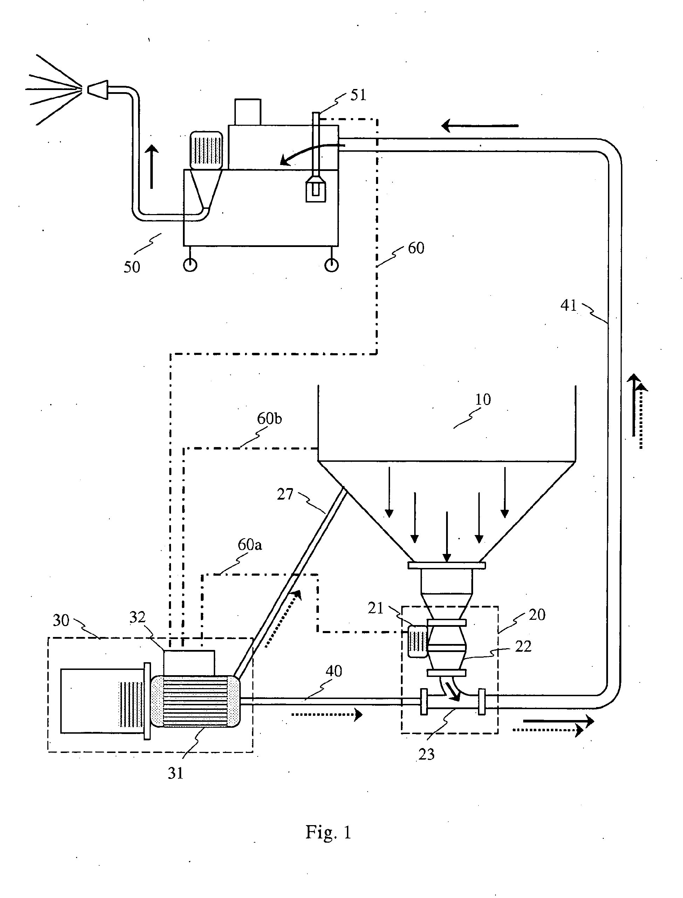

Einrichtungen für den Transport von Schüttgut aus Drucksilos sind aus dem Stand der Technik bekannt. Fig. 1 zeigt eine derartige aus dem Stand der Technik bekannte Einrichtung. Diese Einrichtung weist zwei Einheiten auf. Die erste Einheit 20 besteht aus einem Quetschventil 22 und einem ersten Druckluftkompressor 21, wobei der erste Druckluftkompressor 21 zur Steuerung des Quetschventils 22 dient. Durch Beaufschlagung des Quetschventils 22 mit Druckluft aus dem ersten Druckluftkompressor 21 wird das Quetschventil 22 geschlossen, so dass der pneumatische Transport von Schüttgut aus dem Drucksilo 10 zu einem Verbraucher 50 unterbrochen wird.

Die zweite Einheit 30 der aus dem Stand der Technik bekannten Einrichtung weist einen zweiten Druckluftkompressor 31 und einen Schaltschrank 32 auf. Mittels des zweiten Druckluftkompressors 31 ist eine Rohrvereinigung 23, welche in der ersten Einheit 20 angeordnet ist, mit Druckluft beaufschlagbar. Der zweite Druckluftkompressor 31 ist dabei über eine Rohrleitung 40 mit der Rohrvereinigung 23 verbunden. Das Beaufschlagen der Rohrvereinigung 23 mit Druckluft aus dem zweiten Druckluftkompressor 31 bewirkt einen schwebenden Weitertransport des Schüttguts aus dem Drucksilo 10 von der Rohrvereinigung 23 bis zum Schüttgutverbraucher 50.

Des Weiteren ist aus dem Stand der Technik bekannt, den zweiten Druckluftkompressor 31 mit dem Druckluftsilo 10 über eine Schlauchverbindung 27 miteinander zu verbinden, um das Drucksilo 10 mit Druckluft zum Zwecke der Herstellung bzw. Aufrechterhaltung eines konstanten Drucks im Drucksilo 10 zu beaufschlagen. Hierbei ist die Länge der Schlauchverbindung 27 abhängig von der Entfernung der zweiten Einheit 30 vom Standort des Drucksilos 10.

Der an der zweiten Einheit 30 angeordnete Schaltschrank 32 dient zur Steuerung sowohl des zweiten Druckluftkompressors 31 als auch des ersten Druckluftkompressors 21. Des Weiteren ist der Schaltschrank 32 auch mit einem Füllstandsensor 51, welcher an einem Schüttgutverbraucher 50 angeordnet ist, verbunden. Wird ein entsprechender Füllstand im Schüttgutverbraucher 50 erreicht, steuert der Schaltschrank 32 den zweiten Druckluftkompressor 31 und den ersten Druckluftkompressor 21, indem der erste Druckluftkompressor 21 veranlasst wird, das Quetschventil 22 mit Druckluft zu beaufschlagen, und der zweite Druckluftkompressor 31 veranlasst wird, die Beaufschlagung der Rohrvereinigung 22 mit Druckluft zu unterbrechen.

Aus dem Stand der Technik ist bekannt, den ersten Druckluftkompressor 21, das Quetschventil 22 und die Rohrvereinigung 23 der ersten Einheit 20 in einem ersten Gehäuse anzuordnen. Des Weiteren ist aus dem Stand der Technik bekannt, den zweiten Druckluftkompressor 31 und den Schaltschrank 32 der zweiten Einheit 30 in einem zweiten Gehäuse unterzubringen.

Die beiden Einheiten 20 und 30 müssen bei der Inbetriebnahme eines Drucksilos auf einer Baustelle getrennt angeliefert werden. Nach Anbringen der Einheit 20 am Ausgang des Drucksilos 10 muss die Einheit 30 über eine zusätzliche Rohrleitung mit der Rohrvereinigung 23 der Einheit 20 verbunden werden. Über eine weitere Rohrleitung, welche in Fig. 1 nicht dargestellt ist, wird die Einheit 30 auch mit dem Drucksilo 10 verbunden, um im Drucksilo 10 Überdruck zu erzeugen. Des Weiteren werden zwei Stromkabel für die Stromversorgung des Kompressors 21 und des Magnetventils am Quetschventil 22 benötigt. Diese Stromkabel liegen frei zwischen Einheit 20 und Einheit 30. Dies hat den Nachteil, dass die Einheit 30 an der Baustelle derart in der Nähe des Drucksilos 10 angeordnet werden muss, dass eine Verbindung mittels einer Rohrleitung 40 und der Stromkabel der Einheit 20 mit der Einheit 30 möglich ist. Ein weiterer Nachteil besteht darin, dass zum Zwecke der Diebstahlsicherung beide Einheiten 20 und 30 getrennt gesichert werden müssen. Ein weiterer Nachteil besteht darin, dass zwei Druckluftquellen notwendig sind, um die Einrichtung zu betreiben. Dies erhöht sowohl den Wartungsaufwand als auch den Energieverbrauch der aus dem Stand der Technik bekannten Einrichtung. Ein andere Vorrichtung für den pneumatischen Transport von Schüttgut ist aus EP-A-0 867 389 bekannt.

Aufgabe der vorliegenden Erfindung ist es daher, eine Vorrichtung für den pneumatischen Transport von Schüttgut aus Drucksilos bereitzustellen, die die genannten Nachteile zumindest teilweise vermeidet.

Gemäß der Erfindung bereitgestellt wird demnach eine Vorrichtung für den pneumatischen Transport von Schüttgut aus einem Drucksilo gemäß Anspruch 1.

Gegenüber den aus dem Stand der Technik bekannten Einrichtungen für den pneumatischen Transport von Schüttgut aus einem Drucksilo kann in der erfindungsgemäßen Ausführung der Vorrichtung 70 auf den in Fig. 1 gezeigten Druckluftkompressor 21 für das Schließen des Quetschventils 22 verzichtet werden. Auf die oben genannten Stromkabel kann ebenfalls verzichtet werden. Dies führt zu einer Kostenreduktion bei der Herstellung und nicht zuletzt im Betrieb zu einem niedrigeren Stromverbrauch, da in den aus dem Stand der Technik bekannten Einrichtungen der Kompressor 21 ständig in Betrieb sein muss, damit das Quetschventil 22 bei Bedarf schnell geschlossen werden kann. Die Wartung eines zweiten Kompressors im Betrieb entfällt. Des Weiteren wird die Zahl der einem Verschleiß unterliegenden Teile reduziert, was zu einer höheren Lebensdauer der erfindungsgemäßen Vorrichtung führt.

Die erfindungsgemäße Vorrichtung lässt sich darüber hinaus für den Betrieb mehrerer Drucksilos erweitern. Hierbei kann auf zusätzliche Druckluftkompressoren für die jeweiligen Quetschventile verzichtet werden, da der eine Luftdruckkompressor gemäß der Erfindung in der Lage ist, alle diese Quetschventile mit Druckluft zu versorgen.

Die Erfindung wird anhand der Zeichnung und Ausführungsbeispielen näher beschrieben. In der Zeichnung zeigen:
- Fig. 1: eine Einrichtung für den pneumatischen Transport von Schüttgut aus dem Stand der Technik;
- Fig. 2: eine erste Ausführungsform der erfindungsgemäßen Vorrichtung;
- Fig. 3: eine zweite Ausführungsform der erfindungsgemäßen Vorrichtung; und
- Fig. 4: eine erfindungsgemäße Weiterbildung der erfindungsgemäßen Vorrichtung für den pneumatischen Transport von Schüttgut aus mehreren Drucksilos.

In den Figuren 1 bis 4 ist die Flussrichtung des zu transportierenden Schüttgutes jeweils mit einem durchgehenden Pfeil, die Richtung der Druckluft jeweils mit einem gepunkteten Pfeil gekennzeichnet.

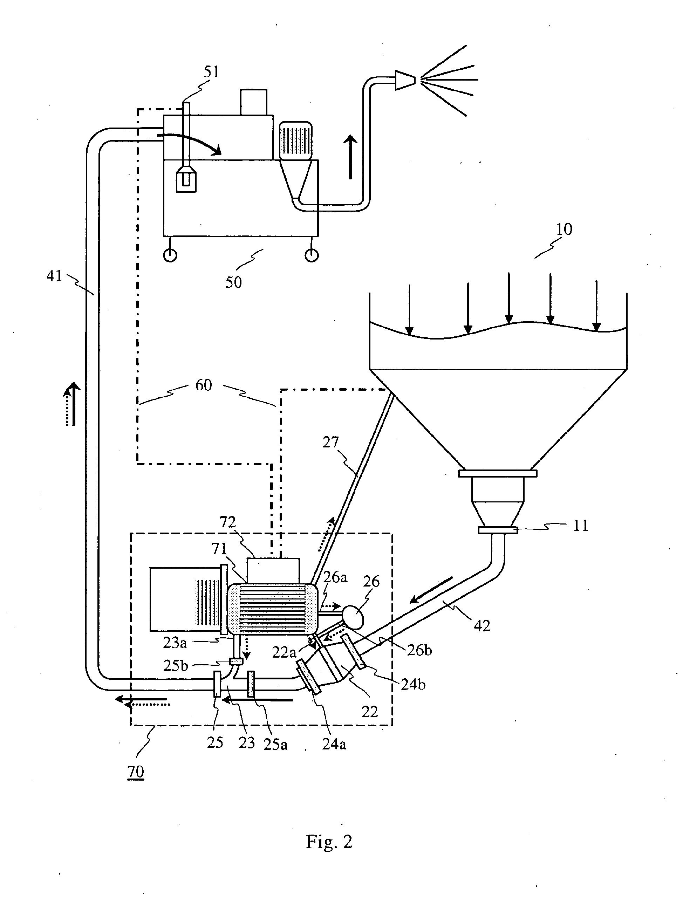

Fig. 2 zeigt ein Ausführungsbeispiel der erfindungsgemäßen Vorrichtung 70 für den Transport von Schüttgut aus Drucksilos. Die Vorrichtung 70 beinhaltet im Wesentlichen einen Druckluftkompressor 71, eine Rohrvereinigung 23 sowie eine pneumatische Absperrvorrichtung 22. Die pneumatische Absperrvorrichtung 22 kann dabei als Quetschventil ausgestaltet sein, welches mittels Beaufschlagung mit Druckluft schließbar ist. Der Eingang 25b der Rohrvereinigung 23 ist über ein Rohrsegment 23a mit dem Druckluftkompressor 71 verbunden. Das Rohrsegment 23a kann dabei auch als Schlauchverbindung ausgebildet sein. Der Eingang 25a der Rohrvereinigung 23 ist mit dem Ausgang 24a des Quetschventils 22 verbunden. Dabei kann der Eingang 25a direkt mit dem Ausgang 24a verbunden werden oder über ein entsprechendes Rohrsegment.

Das Quetschventil 22 ist über ein Rohrsegment 22a mit dem Druckluftkompressor 71 verbunden. Des Weiteren ist auch das Drucksilo 10 über eine Rohr- oder Schlauchverbindung mit dem Druckluftkompressor 71 verbindbar.

Der Druckluftkompressor 71 wird dazu genutzt, um sowohl die Rohrvereinigung 23, das Quetschventil 22 als auch das Drucksilo 10 mit Druckluft zu beaufschlagen. Die Steuerung der Beaufschlagung mit Druckluft der Rohrvereinigung 23, des Quetschventils 22 und des Drucksilos 10 wird hierbei von einer Steuereinrichtung 72 übernommen. Die Steuereinrichtung 72 kann auch als Regeleinrichtung ausgestaltet sein.

Die Steuereinrichtung 72 sorgt dafür, dass das Drucksilo 10 einen konstant bleibenden Druck aufweist, dass das Quetschventil 22 dann geschlossen wird, wenn kein Schüttgut aus dem Drucksilo 10 benötigt wird, und dass die Rohrvereinigung 23 mit genügend Druckluft beaufschlagt wird, so dass ein schwebender Weitertransport des Schüttguts von der Rohrvereinigung 23 bis zum Schüttgutverbraucher 50 gewährleistet ist.

Der Druckluftkompressor 71, die Steuereinrichtung 72, das Quetschventil 22 und die Rohrvereinigung 23 sind dabei in einem Gehäuse untergebracht. Das Quetschventil 22 ist eingangsseitig 24b über ein Rohrsegment 42 bzw. über einen knickfesten und abriebfesten Schlauch, welcher vorzugsweise einen Mantel mit einer Metallspirale aufweist, mit dem Ausgang 11 des Drucksilos 10 verbunden. Das Rohrsegment bzw. der knickfeste Schlauch 42 weist dabei eine Länge von etwa 0,8 bis 1 m und einen Durchmesser von etwa 50 mm auf. Zum Eingang 24b des Quetschventils 22 hin vergrößert sich der Durchmesser des Rohrsegmentes bzw. des knickfesten Schlauches 42 auf etwa 65 mm. Diese Maße gewährleisten einen optimalen Durchfluss des Schüttgutes vom Drucksilo 10 zum Quetschventil 22.

Bei Bedarf kann das Rohrsegment bzw. der knickfeste Schlauch 42 auch länger oder kurzer oder mit größerem oder kleineren Durchmesser ausgestaltet sein. Mittels des durch den Druckluftkompressor 71 erzeugten Druck im Drucksilo 10 und mittels des Eigendrucks des sich im Drucksilo 10 befindlichen Schüttguts gelangt das Schüttgut selbständig vom Ausgang 11 des Drucksilos 10 bis zum Ausgang der Rohrvereinigung 23. Der Materialfluss des Schüttguts vom Ausgang 11 des Drucksilos 10 bis zum Ausgang 25 der Rohrvereinigung 23 kann durch das pneumatische Quetschventil 22, indem dieses geschlossen wird, unterbrochen werden.

Besonders bevorzugt ist das Quetschventil 22 mit einer Neigung von etwa 45° zum Ausgang 11 des Drucksilos 10 angeordnet, um so einen möglichst optimalen Materialfluss durch die Rohrleitung bzw. den Schlauch 42 zu ermöglichen. Eine horizontale Anordnung des Quetschventils 22 gegenüber dem Ausgang 11 des Silos 10 ist ebenso realisierbar - der Druck im Drucksilo 10 muss hierbei jedoch erhöht werden. Bei der in Fig. 2 gezeigten Ausrichtung des Quetschventils 22 von etwa 45°, ist es ausreichend, den Luftdruck im Drucksilo 10 auf etwa 2 bar konstant zu halten. Durch die 45°-Anordnung des Quetschventils 22 wird zudem vermieden, dass die Rohrleitung bzw. der Schlauch 42 einen starken Knick aufweist, was zu erhöhten Reibungsverlusten des Schüttgutes am Knick in der Rohrleitung bzw. des Schlauches 42 führt.

Der Ausgang 25 der Rohrvereinigung 23 wird über eine Schlauchverbindung 41 mit einem Schüttgutverbraucher 50, etwa einer Verputzmaschine mit Füllstandsmelder, verbunden. Durch die Beaufschlagung der Rohrvereinigung 23 mit Druckluft aus dem Druckluftkompressor 71 wird das Schüttgut vom Ausgang 25 der Rohrvereinigung 23 schwebend bis zum Schüttgutverbraucher 50 transportiert. Der Druck der am Eingang 25b der Rohrvereinigung 23 zugeführten Druckluft ist dabei in Abhängigkeit von der Länge der Schlauchverbindung 41 und/oder von der Transporthöhe des zu transportierenden Schüttguts zu wählen.

Mittels Eigendruck bzw. mittels des hergestellten Drucks über den Druckluftkompressor 71 im Drucksilo 10 gelangt das Schüttgut vom Ausgang 11 des Drucksilos über die Rohrverbindung 42 zum Quetschventil 22 und von dort aus zur Rohrvereinigung 23. Die beaufschlagte Druckluft an der Rohrvereinigung 23 sorgt für den schwebenden Weitertransport des Schüttguts zum Schüttgutverbraucher 50. Wird am Schüttgutverbraucher 50 kein Schüttgut mehr benötigt, was etwa durch eine Füllstandsmelder 51 ermittelt werden kann, so sorgt der Schaltschrank 72 dafür, dass das Quetschventil 22 über eine Rohrvereinigung 22a durch den Druckluftkompressor 71 mit Druckluft beaufschlagt wird, so dass sich das Quetschventil schließt. Wird die Beaufschlagung des Quetschventils 22 mit Druckluft abgebrochen, öffnet sich das Quetschventil wieder und das am Eingang 24b des Quetschventil zur Verfügung stehende Schüttgut wird wieder über die Rohrvereinigung 23 mittels Druckluft schwebend zum Schüttgutverbraucher 50 transportiert.

Die Vorrichtung 70 weist eine zusätzliche Druckluftkammer 26 auf, welche ebenfalls über eine Rohrverbindung 26a mit dem Druckluftkompressor 71 verbunden ist. Zusätzlich ist die Druckluftkammer 26 über ein Rohrsegment 26b mit dem Rohrsegment 22a, welches das Quetschventil 22 mit dem Druckluftkompressor 71 verbindet, verbunden. Am Anfang einer Inbetriebnahme der Vorrichtung 70 wird die Druckluftkammer 26 mit Druckluft aus dem Druckluftkompressor beaufschlagt, wobei vorzugsweise ein Druck von etwa 3 bar in der Druckluftkammer 26 erzeugt wird. Die Rohrsegmente 26a und 26b weisen jeweils ein Rückschlagventil auf, so dass die in der Druckluftkammer 26 befindliche Druckluft nicht entweichen kann. Der Druck in der Druckluftkammer 26 ist dabei so zu wählen, dass der Druck ausreicht, um das Quetschventil 22 im Notfall noch schließen zu können. Tritt etwa eine Stromunterbrechung am Druckluftkompressor 71 auf oder wird der Druckluftkompressor 71 während des Betriebs defekt, so öffnet sich das Rückschlagventil im Rohrsegment 26b, wodurch das Quetschventil 22 mit Druckluft aus der Druckluftkammer 26 beaufschlagt wird. Das Rückschlagventil im Rohrsegment 26a verhindert dabei ein Entweichen der Druckluft aus der Druckluftkammer 26, so dass das Quetschventil 22 permanent geschlossen bleibt.

Das Gehäuse der Vorrichtung 70 kann etwa als Rohrgestell ausgebildet sein, wobei das Rohrgestell gleichzeitig die Druckluftkammer 26 bildet.

Ein besonderer Vorteil gegenüber den aus dem Stand der Technik bekannten Einrichtungen besteht darin, dass die Vorrichtung 70 nunmehr eine Einheit darstellt, was zum einen eine einfachere Diebstahlsicherung ermöglicht und zum anderen eine einfachere Handhabung beim Transport und beim Einsatz an der jeweiligen Baustelle. Besonders vorteilhaft ist es jedoch, dass durch die Vermeidung der Schlauchverbindung 40 und dem Druckluftkompressor 21 keine freiliegenden Kabel und Schlauchverbindungen von der Vorrichtung 70 zum Drucksilo 10 führen. In den aus dem Stand der Technik bekannten Einrichtungen wird, wie in Fig. 1 gezeigt, der Druckluftkompressor 21 über eine elektrische Leitung 60a von der Steuereinheit 32, welche sich in der Einheit 30 befindet, gesteuert.

In einer besonderen Ausführungsform der erfindungsgemäßen Vorrichtung 70 kann durch geeignete Anordnung des Quetschventils 22 die Vorrichtung 70 direkt mit dem Ausgang 11 des Drucksilos 10 verbunden werden, so dass auf die Rohrleitung bzw. die Schlauchverbindung 42 sowie auf die oben genannten Stromleitungen verzichtet werden kann.

Durch die erfindungsgemäße Vorrichtung 70 kann somit auf einen zweiten Druckluftkompressor 21, auf eine Rohrleitung 40 und auf ein Steuerkabel 60a verzichtet werden, was zu einer besseren Handhabbarkeit der Vorrichtung 70, zu einem niedrigeren Energieverbrauch und zu niedrigeren Herstellungskosten führt.

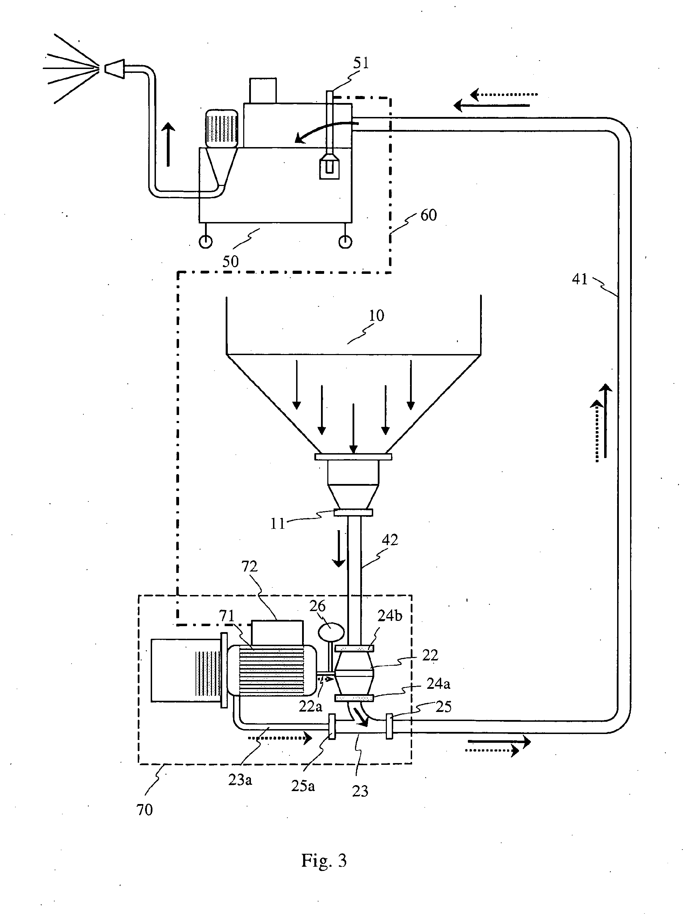

Fig. 3 zeigt die erfindungsgemäße Vorrichtung mit einer alternativen Anordnung des Quetschventils 22 am Druckluftkompressor 71. Das Quetschventil 22 ist dabei ebenfalls am Eingang 24b mittels einer Rohr- bzw. Schlauchverbindung 42 mit dem Ausgang 11 des Drucksilos 10 verbunden. Im Unterschied zu der in Fig. 2 gezeigten Vorrichtung wird die mit dem Quetschventil 22 verbundene Rohrvereinigung 23 nicht seitlich mit Druckluft beaufschlagt sondern über den Eingang 23a von hinten. Auch hierbei bewirkt die Beaufschlagung mit Druckluft der Rohrvereinigung 23 einen schwebenden Weitertransport des Schüttguts vom Ausgang 25 der Rohrvereinigung 23 bis zum Schüttgutverbraucher 50. Auch in der in Fig. 3 gezeigten Anordnung kann auf dem aus dem Stand der Technik bekannten zweiten Druckluftkompressor 21 und auf die zusätzliche Rohr- bzw. Schlauchverbindung 40 verzichtet werden.

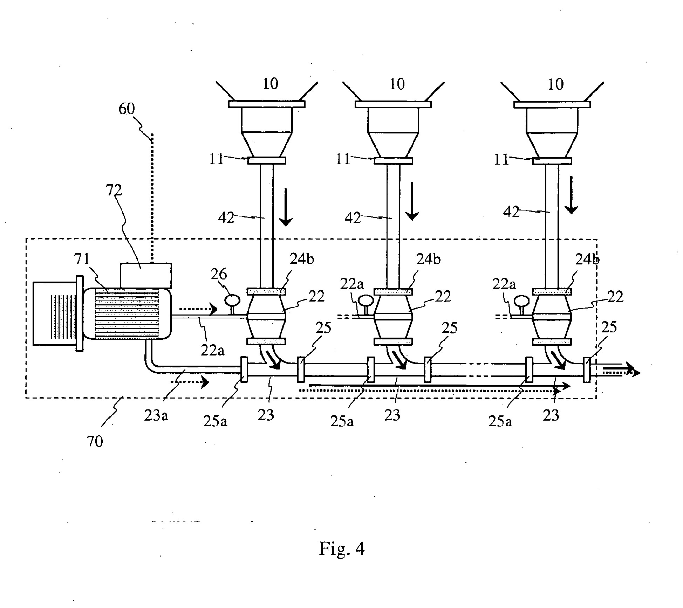

Fig. 4 zeigt eine erfindungsgemäße Weiterbildung der Vorrichtung für den pneumatischen Transport von Schüttgut aus mehreren Drucksilos. Die Vorrichtung 70 beinhaltet hierbei eine Mehrzahl von Quetschventilen 22 sowie eine Mehrzahl daran angeschlossener Rohrvereinigungen 23. Der Ausgang 25 der ersten Rohrvereinigung 23 ist dabei mit dem Eingang 25a der nächsten Rohrvereinigung 23 über ein Rohr- bzw. Schlauchsegment verbunden. Des Weiteren ist jedem Quetschventil 22 eine zusätzliche Druckluftkammer 26 zugeordnet, welche, wie bereits in Fig. 2 beschrieben, ein Schließen des jeweiligen Quetschventils 22 im Falle eines Ausfalls des Druckluftkompressors 71 bewirkt. Zu diesem Zweck kann auch eine gemeinsame Druckluftkammer 26 für alle Quetschventile 22 bereitgestellt werden, wobei auf einen entsprechenden Überdruck in der gemeinsamen Druckkammer 26 zu achten ist, so dass ein Schließen aller angeschlossenen Quetschventile 22 über die Druckluft aus der gemeinsamen Druckluftkammer 26 ermöglicht wird. Die erste Rohrvereinigung 23 ist am Eingang 25a mit einer Rohrleitung bzw. einer Schlauchleitung 23a mit dem Druckluftkompressor 71 verbunden. Das jeweils an den einzelnen Rohrvereinigungen zugeführte Material aus den Drucksilos 10 wird mittels der zugeführten Druckluft schwebend zum Schüttgutverbraucher weitertransportiert. Die Steuereinrichtung 72 sorgt dafür, dass die Quetschventile nach bestimmten Vorgaben mit Druckluft aus dem Kompressor 71 beaufschlagt und somit geschlossen werden.

Dadurch wird es möglich, mit einer einzigen Vorrichtung 70 den Transport von Schüttgut aus mehreren Drucksilos 10 zu einem Schüttgutverbraucher zu steuern bzw. zu regeln. Gegenüber den aus dem Stand der Technik bekannten Vorrichtungen für den pneumatischen Transport von Schüttgut aus Drucksilos kann hierbei auf eine Mehrzahl von zusätzlichen Druckluftkompressoren 21, wie in Fig. 1 gezeigt, verzichtet werden. Durch eine entsprechende Steuerung der Beaufschlagung mit Druckluft der Quetschventile 22 ist es sowohl möglich, Schüttgut gezielt aus einem Drucksilo 10 zum Schüttgutverbraucher zu transportieren als auch eine Mischung von unterschiedlichen Schüttgütern aus mehreren Drucksilos. Auch im Einsatz der erfindungsgemäßen Vorrichtung 70 in Verbindung mit mehreren Drucksilos 10 weist sie den Vorteil auf, dass lediglich eine Einheit gewartet, transportiert und gegen Diebstahl gesichert werden muss.

In einer weiteren Ausgestaltung der in Fig. 4 gezeigten Vorrichtung 70 können die Ausgänge 25 der Rohrvereinigungen 23 jeweils über ein Rohr- bzw. Schlauchsegment mit einzelnen Schüttgutverbrauchern verbunden werden. Dadurch kann Schüttgut aus unterschiedlichen Drucksilos unterschiedlichen Schüttgutverbrauchern zugeführt werden. Auf zusätzliche Fig. 1 gezeigte aus dem Stand der Technik bekannte Einrichtungen kann verzichtet werden, da alle benötigten Rohrvereinigungen 23 und Quetschventile 22 in der Vorrichtung 70 angeordnet sind und lediglich ein gemeinsamer Druckluftkompressor 71 notwendig ist.

Selbstverständlich kann die erfindungsgemäße Vorrichtung 70 neben einer schwebenden Förderung des Schüttgutes durch Verringern der Druckluftzufuhr am Eingang 25b der Rohrvereinigung 23 auch für eine Strähnenförderung des Schüttgutes eingesetzt werden. Durch weiteres Verringern der Druckluftzufuhr am Eingang 25b ist auch eine Strähnenförderung über ruhender Ablagerung sowie eine Pfropfenförderung möglich.

## Patentansprüche

1. Vorrichtung (70) für den pneumatischen Transport von Schüttgut aus einem Drucksilo (10), aufweisend eine Druckluftquelle (71), eine pneumatische Absperrvorrichtung (22), an welcher ausgangsseitig eine Rohrvereinigung (23) angeordnet ist, wobei die pneumatische Absperrvorrichtung (22) eingangsseitig einen ersten Anschluss (24b) für eine Schüttgut-Zuleitung (42) aufweist und wobei der erste Anschluss (24b) über die Schüttgut-Zuleitung (42) mit dem Drucksilo (10) verbindbar ist
wobei sowohl die pneumatische Absperrvorrichtung (22) als auch die Rohrvereinigung (23) mit Druckluft aus der Druckluftquelle (71) beaufschlagbar ist, **dadurch gekennzeichnet, dass** die Druckluftquelle (71), die Rohrvereinigung (23) und die pneumatische Absperrvorrichtung (22) als eine Einheit ausgebildet ist.

2. Vorrichtung gemäß Anspruch 1, **dadurch gekennzeichnet, dass** die Rohrvereinigung (23) ausgangsseitig einen zweiten Anschluss (25) für eine Schüttgut-Ableitung aufweist.

3. Vorrichtung gemäß Anspruch 2, **dadurch gekennzeichnet, dass** die pneumatische Absperrvorrichtung (22) im geschlossenen Zustand den Schüttguttransport vom ersten Anschluss (24) zum zweiten Anschluss (25) unterbricht.

4. Vorrichtung gemäß einem der vorhergehenden Ansprüche, **dadurch gekennzeichnet, dass** die Rohrvereinigung (23) einen dritten Anschluss (25b) zum Anschließen der Rohrvereinigung (23) an die Druckluftquelle (71) aufweist, über welchen die Rohrvereinigung (23) mit Druckluft aus der Druckluftquelle (71) beaufschlagbar ist.

5. Vorrichtung gemäß einem der vorhergehenden Ansprüche, **dadurch gekennzeichnet, dass** das Beaufschlagen der pneumatischen Absperrvorrichtung (22) mit Druckluft aus der Druckluftquelle (71) ein Schließen der pneumatischen Absperrvorrichtung (22) bewirkt, wobei die pneumatische Absperrvorrichtung (22) ein pneumatisches Quetschventil ist.

6. Vorrichtung gemäß einem der vorhergehenden Ansprüche, **dadurch gekennzeichnet, dass** das Drucksilo (10) mit Druckluft aus der Druckluftquelle (71) beaufschlagbar ist und dass sie eine Einrichtung (72) zum Steuern der Beaufschlagung mit Druckluft der Rohrvereinigung (23), der pneumatischen Absperrvorrichtung (22) und des Drucksilos (10) aufweist.

7. Vorrichtung gemäß Anspruch 6, **dadurch gekennzeichnet, dass** sie eine Mehrzahl von pneumatischen Absperrvorrichtungen (22) aufweist, welche mit einer Mehrzahl von Drucksilos (10) yerbindbar sind und welche mit Druckluft aus der Druckluftquelle (71) beaufschlagbar sind, wobei die Beaufschlagung mit Druckluft jeder der Mehrzahl von pneumatischen Absperrvorrichtungen (22) durch die Einrichtung (72) steuerbar ist.

8. Vorrichtung gemäß einem der vorhergehenden Ansprüche, **dadurch gekennzeichnet, dass** der Transport des Schüttgutes vom Drucksilo (10) zum zweiten Anschluss (25) der Rohrvereinigung (23) mittels Eigendruck aus dem Drucksilo (10) erfolgt und dass der Weitertransport vom zweiten Anschluss (25) der Rohrvereinigung (23) mittels der an der Rohrvereinigung (23) beaufschlagten Druckluft aus der Druckluftquelle (71) erfolgt.

9. Vorrichtung gemäß einem der vorhergehenden Ansprüche, **dadurch gekennzeichnet, dass** sie einen Druckbehälter (26) aufweist, welcher mit Druckluft aus der Druckluftquelle (71) beaufschlagbar ist und mit der pneumatischen Absperrvorrichtung (22) verbindbar ist, derart, dass der Luftdruck im Druckbehälter (26) ausreicht um mittels Beaufschlagung der pneumatischen Absperrvorrichtung (22) mit Druckluft aus dem Druckbehälter (26) die Absperrvorrichtung (22) zu schließen.

10. Vorrichtung gemäß einem der vorhergehenden Ansprüche, **dadurch gekennzeichnet, dass** die Druckluftquelle (71), die Rohrvereinigung (23) und die pneumatische Absperrvorrichtung (22) in einem Gehäuse angeordnet sind.

11. Vorrichtung gemäß einem der vorhergehenden Ansprüche, **dadurch gekennzeichnet, dass** die pneumatische Absperrvorrichtung (22) mit einer Neigung von 45° zum Ausgang des Drucksilos (10) angeordnet ist.

12. Vorrichtung gemäß einem der vorhergehenden Ansprüche, **dadurch gekennzeichnet, dass** die Schüttgut-Zuleitung (42) ein Länge von 0,8 m bis 1 m und einen Durchmesser von 50 mm aufweist, wobei sich der Durchmesser der Schüttgut-Zuleitung (42) im Bereich des ersten Anschlusses (24b) auf 65 mm vergrößert.

## Claims

1. Device (70) for the pneumatic transport of bulk material from a pressure silo (10), comprising a pneumatic source (71), a pneumatic shutoff device (22), at which on the output side a pipe connection (23) is arranged, whereby the pneumatic shutoff device (22) on the input side comprises a first connection (24b) for a bulk material supply line (42) and whereby the first connection (24b) being connectable by means of the bulk material supply line (42) with the pressure silo (10), whereby both the pneumatic shutoff device (22) and the pipe connection (23) being impingeable with compressed air from the pneumatic source (71), **characterised in that** the pneumatic source (71), the pipe connection (23) and the pneumatic shutoff device (22) are formed as one unit.

2. Device according to claim 1, **characterised in that** the pipe connection (23) on the exit side comprises a second connection (25) for a bulk material discharge.

3. Device according to claim 2, **characterised in that** the pneumatic shutoff device (22) in the closed state interrupts the bulk material transport from the first connection (24) to the second connection (25).

4. Device according to one of the preceding claims, **characterised in that** the pipe connection (23) comprises a third connection (25b) for connecting the pipe connection (23) to the pneumatic source (71), by which the pipe connection (23) is impingeable with compressed air from the pneumatic source (71).

5. Device according to one of the preceding claims, **characterised in that** charging the pneumatic shutoff device (22) with compressed air from the pneumatic source (71) causes the closing of the pneumatic shutoff device (22), the pneumatic shutoff device (22) being a pneumatic pinch valve.

6. Device according to one of the preceding claims, **characterised in that** the pressure silo (10) is impingeable with compressed air from the pneumatic source (71) and that it comprises a device (72) for controlling the admission of compressed air of the pipe connection (23), of the pneumatic shutoff device (22) and of the pressure silo (10).

7. Device according to claim 6, **characterised in that** it comprises a plurality of pneumatic shutoff devices (22), which are connectable with a plurality of pressure silos (10) and which are impingeable with compressed air from the pneumatic source (71), whereby the admission of compressed air of each of the plurality of pneumatic shutoff devices (22) controllable by the device (72).

8. Device according to one of the preceding claims, **characterised in that** the transport of the bulk material from the pressure silo (10) to the second connection (25) of the pipe connection (23) takes place by means of inherent pressure from the pressure silo (10) and that the further transport from the second connection (25) of the pipe connection (23) takes place by means of the compressed air admitted at the pipe connection (23) from the pneumatic source (71).

9. Device according to one of the preceding claims, **characterised in that** it comprises a pressurized vessel (26), which is impingeable with compressed air from the pneumatic source (71) and connectable with the pneumatic shutoff device (22) in such a way that the air pressure in the pressurized vessel (26) is enough in order to close the shutoff device (22) by means of admission of the pneumatic shutoff device (22) with compressed air from the pressurized vessel (26).

10. Device according to one of the preceding claims, **characterised in that** the compressed air source (71), the pipe connection (23) and the pneumatic shutoff device (22) are arranged in a casing.

11. Device according to one of the preceding claims, **characterised in that** the pneumatic shutoff device (22) is arranged with an inclination of 45° as to the exit of the pressure silo (10).

12. Device according to one of the preceding claims, **characterised in that** the bulk material supply line (42) has a length from 0,8 m to 1 m and a diameter of 50 mm, whereby the diameter of the bulk material supply line (42) enlarges in the area of the first connecting (24b) up to 65 mm.

## Revendications

1. Dispositif (70) pour le transport pneumatique de produit en vrac d'un silo à pression (10), présentant une source d'air comprimé (71), une barrière pneumatique (22), sur laquelle du côté de la sortie est arrangée une union de tuyau (23), la barrière pneumatique (22) présentant du côté de l'entrée une première connexion (24b) pour une alimentation de produit en vrac (42) et la première connexion (24b) moyennant l'alimentation de produit en vrac (42) étant connectable avec le silo de pression (10), aussi bien la barrière pneumatique (22) que l'union de tuyau (23) étant alimentable de la source d'air comprimé (71) avec de l'air comprimé, **caractérisé en ce que** la source d'air comprimé (71), l'union de tuyau (23) et la barrière pneumatique (22) sont formées comme une unité.

2. Dispositif conformément à la revendication 1, **caractérisé en ce que** l'union de tuyau (23) présente du côté de la sortie une seconde connexion (25) pour une dérivation de produit en vrac.

3. Dispositif conformément à la revendication 2, **caractérisé en ce que** la barrière pneumatique (22) à l'état fermé interrompt le transport de produit en vrac de la première connexion (24) à la seconde connexion (25).

4. Dispositif conformément à une des revendications précédentes, **caractérisé en ce que** l'union de tuyau (23) présente une troisième connexion (25b) pour connecter l'union de tuyau (23) à la source d'air comprimé (71), moyennant laquelle l'union de tuyau (23) est alimentable avec de l'air comprimé de la source d'air comprimé (71).

5. Dispositif conformément à une des revendications précédentes, **caractérisé en ce que** l'alimentation de la barrière pneumatique (22) avec de l'air comprimé de la source d'air comprimé (71) provoque une fermeture de la barrière pneumatique (22), et que la barrière pneumatique (22) est une vanne à manchon pneumatique.

6. Dispositif conformément à une des revendications précédentes, **caractérisé en ce que** le silo à pression (10) est alimentable avec de l'air comprimé de la source d'air comprimé (71) et qu'il présente une installation (72) pour commander l'alimentation de l'union de tuyau (23), de la barrière pneumatique (22) et du silo à pression (10) avec de l'air comprimé.

7. Dispositif conformément à la revendication 6, **caractérisé en ce qu'**il présente une pluralité de barrières pneumatiques (22), lesquelles sont connectables avec une pluralité de silos à pression (10) et lesquelles sont alimentables avec de l'air comprimé de la source d'air comprimé (71), l'alimentation avec de l'air comprimé de chacune des pluralités de barrières pneumatiques (22) étant contrôlable par l'installation (72).

8. Dispositif conformément à une des revendications précédentes, **caractérisé en ce que** le transport du produit en vrac du silo à pression (10) à la seconde connexion (25) de l'union de tuyau (23) a lieu par pression propre du silo à pression (10) et que le transport de la seconde connexion (25) de l'union de tuyau (23) a lieu moyennant l'air comprimé de la source d'air comprimé (71) alimenté à l'union de tuyau (23).

9. Dispositif conformément à une des revendications précédentes, **caractérisé en ce qu'**il présente un récipient de pression (26), lequel est alimentable avec de l'air comprimé de la source d'air comprimé (71) et est connectable avec la barrière pneumatique (22) de telle façon que la pression de l'air dans le récipient de pression (26) suffit pour fermer la barrière (22) par l'alimentation la barrière pneumatique (22) avec de l'air comprimé du récipient de pression (26).

10. Dispositif conformément à une des revendications précédentes, **caractérisé en ce que** la source d'air comprimé (71), l'union de tuyau (23) et la barrière pneumatique (22) sont arrangées dans un boîtier.

11. Dispositif conformément à une des revendications précédentes, **caractérisé en ce que** la barrière pneumatique (22) est arrangée avec une inclinaison de 45° par rapport à la sortie du silo à pression (10).

12. Dispositif conformément à une des revendications précédentes, **caractérisé en ce que** l'alimentation de produit en vrac (42) présente une longueur de 0, 8 m jusqu'à 1 m et un diamètre de 50 mm, le diamètre de l'alimentation de produit en vrac (42) s'agrandissant de 65 mm dans le secteur de la première connexion (24b).
